# EUROPEAN PATENT APPLICATION

(11) **EP 4 692 603 A1**
(43) Date of publication of application: **11.02.2026**
(21) Application number: 24823195.3
(22) Date of filing: 23.05.2024
(51) Int. Cl.: F16H 61/16, B60L 15/20, E02F 9/20, F16H 59/02, F16H 59/50

(54) **WHEEL LOADER AND METHOD FOR CONTROLLING WHEEL LOADER**

(30) Priority: 15.06.2023 JP 2023098459
(71) Applicant: Komatsu Ltd., Tokyo 105-8316 (JP)
(72) Inventor: TAKASE, Yuki, Tokyo 105-8316 (JP); KAMEKURA, Hirotaka, Tokyo 105-8316 (JP)
(74) Representative: Flügel Preissner Schober Seidel
(86) International application number: PCT/JP2024/018961
(87) International publication number: WO 2024/257573

(57) **Abstract**

A wheel loader includes a vehicle body, an electric motor, a transmission, and a controller. The vehicle body includes a traveling body and a work implement. The electric motor is installed in the vehicle body. The transmission is installed in the vehicle body. The transmission can change a transmission gear ratio by shifting among multiple gears. The transmission transmits a driving force from the electric motor to the traveling body. The controller controls the transmission. The controller acquires a current work mode from multiple work modes corresponding to types of work executed by the vehicle body. When the current work mode is load transport, the controller holds the transmission in a predetermined gear and prohibits the transmission from shifting from the predetermined gear to another gear.

## Description

### Technical Field

The present disclosure relates to a wheel loader and a method for controlling a wheel loader.

### Background Art

Some wheel loaders include a transmission that can change the transmission gear ratio by shifting among multiple gears. For example, the wheel loader of PTL 1 includes a shift operation member for setting a maximum gear of a transmission. For example, when the operator operates the shift operation member to the fourth gear, the maximum gear of the transmission is set to the fourth gear. The transmission changes the transmission gear ratio by shifting among the first gear to the fourth gear in accordance with the vehicle speed or the engine speed.

### Citation List

### Patent Literature

PTL 1:JP2023-14108A

### Summary of Invention

### Technical Problem

The wheel loader performs various kinds of work such as excavation or load transport. For example, in the load transport, the wheel loader scoops up a target object of the work with a work implement and travels in a state of holding the target object of the work on the work implement. The wheel loader travels to a transport vehicle such as a truck and loads a target object. The wheel loader repeats the above operation and thus transports and loads the target object from a predetermined place onto the transport vehicle.

As described above, in the load transport, the wheel loader frequently repeats stopping and traveling. Therefore, when the transmission changes the transmission gear ratio according to the vehicle speed or the engine speed, as described above, the transmission gear ratio is frequently changed during the load transport. When the transmission gear ratio is changed, a shift shock occurs. Therefore, when the transmission gear ratio is frequently changed during the load transport and a shift shock occurs frequently, there is a concern that the load may be spilt from the work implement.

An object of the present disclosure is to suppress the occurrence of a shift shock during load transport in a wheel loader.

### Solution to Problem

A wheel loader according to an aspect of the present disclosure includes a vehicle body, an electric motor, a transmission, and a controller. The vehicle body includes a traveling body and a work implement. The electric motor is installed in the vehicle body. The transmission is installed in the vehicle body. The transmission can change a transmission gear ratio by shifting among multiple gears. The transmission transmits a driving force from the electric motor to the traveling body. The controller controls the transmission. The controller acquires a current work mode from multiple work modes corresponding to types of work executed by the vehicle body. When the current work mode is load transport, the controller holds the transmission in a predetermined gear and prohibits the transmission from shifting from the predetermined gear to another gear.

A method according to another aspect of the present disclosure is a method for controlling a wheel loader. The wheel loader includes a traveling body, a work implement, an electric motor, and a transmission. The transmission can change a transmission gear ratio by shifting among multiple gears, and transmits a driving force from the electric motor to the traveling body. The method according to the present aspect includes: acquiring a current work mode from multiple work modes corresponding to types of work executed by the wheel loader; and holding the transmission in a predetermined gear and prohibiting the transmission from shifting to a gear other than the predetermined gear when the current work mode is load transport.

### Advantageous Effects of Invention

According to the present disclosure, when the current work mode is load transport, the transmission is held in the predetermined gear, and the transmission is prohibited from shifting from the predetermined gear to another gear. Therefore, the occurrence of a shift shock due to the transmission is suppressed.

### Brief Description of Drawings

[FIG. 1] FIG. 1 is a side view of a wheel loader according to an embodiment.
[FIG. 2] FIG. 2 is a block diagram showing the configuration of a drive system installed in the wheel loader.
[FIG. 3] FIG. 3 is a diagram illustrating a tractive-force-to-vehicle-speed characteristic at each of multiple gears of a transmission.
[FIG. 4] FIG. 4 is a block diagram showing the configuration of a control system of the wheel loader.
[FIG. 5] FIG. 5 is a flowchart showing shift control processing of the transmission.
[FIG. 6] FIG. 6 is a top view showing the operation of the wheel loader in V-shape loading.
[FIG. 7] FIG. 7 is a flowchart illustrating shift control processing of a transmission according to a modification example.

### Description of Embodiments

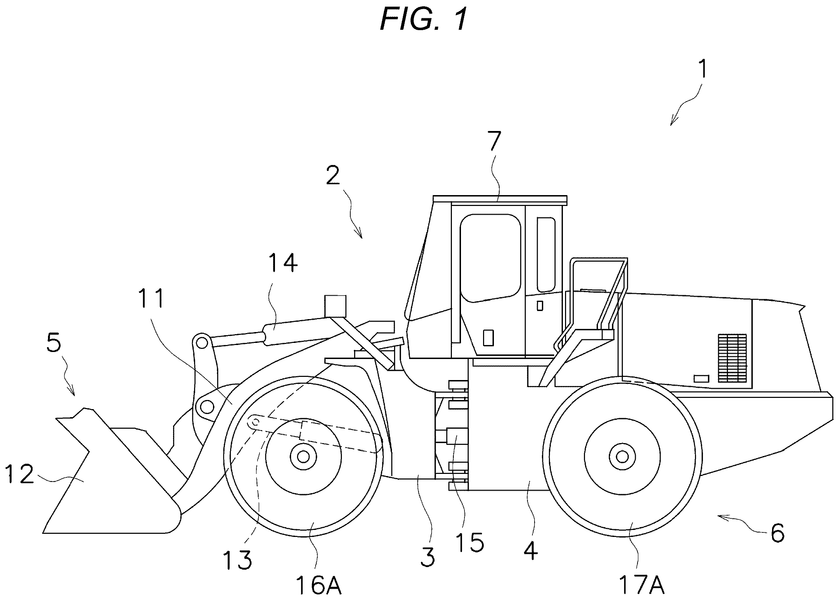

An embodiment of the present invention will be described below with reference to the drawings. FIG. 1 is a side view of a wheel loader 1 according to the embodiment of the present disclosure. As shown in FIG. 1, the wheel loader 1 includes a vehicle body 2. The vehicle body 2 includes a front vehicle body 3, a rear vehicle body 4, a work implement 5, and a traveling body 6.

The rear vehicle body 4 is connected to the front vehicle body 3 so as to be able to turn left and right. A cab 7 is disposed in the rear vehicle body 4. A steering cylinder 15 is coupled to the front vehicle body 3 and the rear vehicle body 4. The steering cylinder 15 is a hydraulic cylinder. When the steering cylinder 15 expands and contracts, the front vehicle body 3 turns left and right in relation to the rear vehicle body 4.

The work implement 5 is used for work such as excavation. The work implement 5 is attached to the front vehicle body 3. The work implement 5 includes a boom 11, a bucket 12, a boom cylinder 13, and a bucket cylinder 14. The boom cylinder 13 and the bucket cylinder 14 are hydraulic cylinders. As the boom cylinder 13 expands and contracts, the boom 11 operates. As the bucket cylinder 14 expands and contracts, the bucket 12 operates.

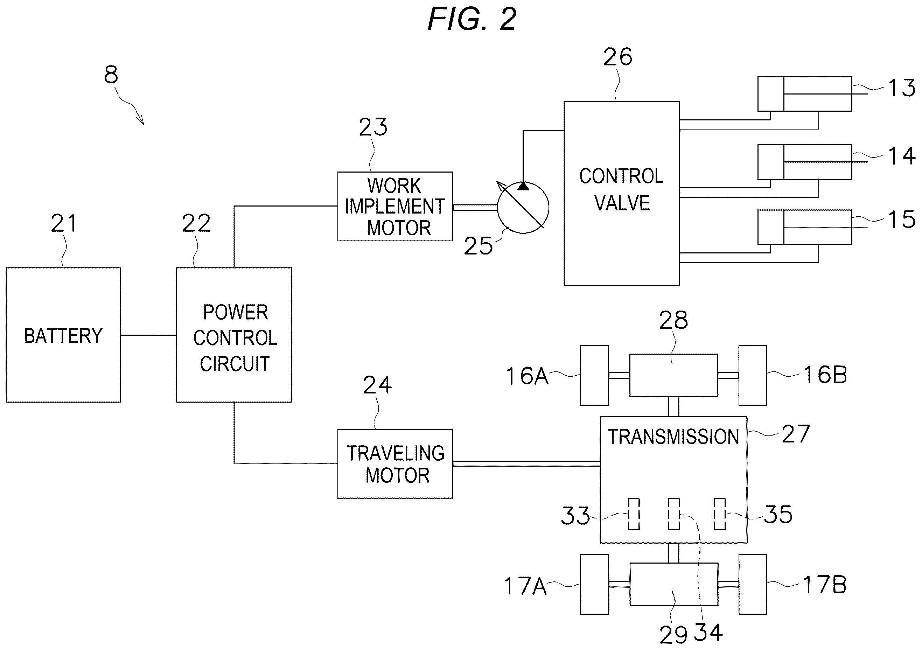

The traveling body 6 causes the wheel loader 1 to travel. FIG. 2 is a block diagram showing the configuration of a drive system 8 installed in the wheel loader 1. As shown in FIGS. 1 and 2, the traveling body 6 includes front wheels 16A, 16B and rear wheels 17A, 17B. The front wheels 16A, 16B are rotatably supported by the front vehicle body 3. The rear wheels 17A, 17B are rotatably supported by the rear vehicle body 4.

As shown in FIG. 2, the drive system 8 includes a battery 21, a power control circuit 22, a work implement motor 23, and a traveling motor 24. The work implement motor 23 and the traveling motor 24 are electric motors. The battery 21 supplies electric power to the work implement motor 23 and the traveling motor 24. The power control circuit 22 controls the electric power supplied to the work implement motor 23 and the traveling motor 24. The power control circuit 22 includes, for example, an inverter. The work implement motor 23 generates a driving force for driving the work implement 5. The traveling motor 24 generates a driving force for driving the traveling body 6.

The drive system 8 includes a work implement pump 25 and a control valve 26. The work implement pump 25 is a variable displacement hydraulic pump. The work implement pump 25 is connected to the work implement motor 23. The work implement pump 25 is driven by the work implement motor 23 and thus supplies hydraulic oil to the above-described hydraulic cylinders 13 to 15. The control valve 26 is connected to the work implement pump 25 and the hydraulic cylinders 13 to 15 via a hydraulic circuit. The control valve 26 includes multiple valves. The control valve 26 controls the flow rate of the hydraulic oil supplied from the work implement pump 25 to the hydraulic cylinders 13 to 15.

The drive system 8 includes a transmission 27, a front axle 28, and a rear axle 29. The front wheels 16A, 16B are connected to the transmission 27 via the front axle 28. The rear wheels 17A and 17B are connected to the transmission 27 via the rear axle 29. The transmission 27 is connected to the traveling motor 24. The transmission 27 shifts the driving force from the traveling motor 24 and transmits the driving force to the traveling body 6.

The transmission 27 includes multiple transmission gears 33 to 35. The transmission 27 transmits the driving force from the traveling motor 24 to the traveling body 6.

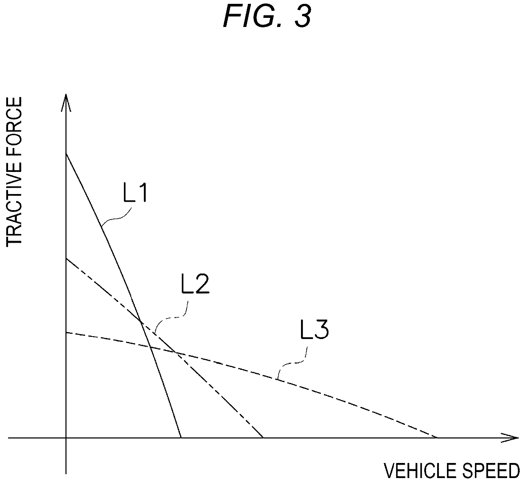

The multiple transmission gears 33 to 35 have different gear ratios. The transmission 27 includes transmission gears 33 to 35 for first to third gears. Therefore, the transmission 27 can change the transmission gear ratio by shifting to any of the first gear, the second gear, and the third gear. FIG. 3 is a diagram illustrating a tractive-force-to-vehicle-speed characteristic at each of multiple gears. The tractive-force-to-vehicle-speed characteristic indicates the maximum tractive force of the wheel loader 1 at each vehicle speed.

In FIG. 3, L1 indicates the tractive-force-to-vehicle-speed characteristic at the first gear. L2 indicates the tractive-force-to-vehicle-speed characteristic at the second gear. In FIG. 3, L3 indicates the tractive-force-to-vehicle-speed characteristic at the third gear. As shown in FIG. 3, the maximum tractive force is the largest at the first gear and the smallest at the third gear. The maximum tractive force at the second gear is a value between that at the first gear and that at the second gear. The maximum vehicle speed is the highest at the third gear and the lowest at the first gear. The maximum tractive force at the second gear is a value between that at the first gear and that at the second gear.

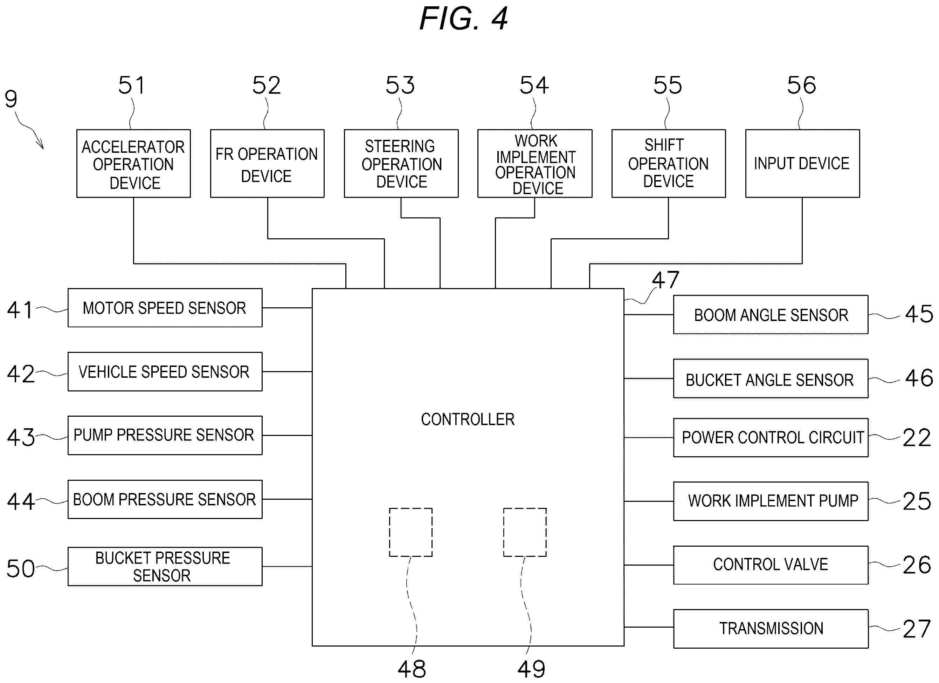

FIG. 4 is a block diagram showing the configuration of a control system 9 of the wheel loader 1. As shown in FIG. 4, the control system 9 includes a motor speed sensor 41 and a vehicle speed sensor 42. The motor speed sensor 41 detects the output rotation speed of the traveling motor 24. The vehicle speed sensor 42 detects the vehicle speed of the wheel loader 1.

The control system 9 includes a pump pressure sensor 43, a boom pressure sensor 44, and a bucket pressure sensor 50. The pump pressure sensor 43 detects the discharge pressure of the work implement pump 25. The boom pressure sensor 44 detects the bottom pressure of the boom cylinder 13. The bucket pressure sensor 50 detects the bottom pressure of the bucket cylinder 14.

The control system 9 includes a boom angle sensor 45 and a bucket angle sensor 46. The boom angle sensor 45 detects the boom angle. The boom angle is the angle of the boom 11 in relation to the front vehicle body 3. The bucket angle sensor 46 detects the bucket angle. The bucket angle is the angle of the bucket 12 in relation to the boom 11.

The control system 9 includes a controller 47. The controller 47 controls the wheel loader 1. The controller 47 includes a processor 48 and a storage device 49. The processor 48 is, for example, a central processing unit (CPU). The processor 48 executes processing for controlling the wheel loader 1 in accordance with a program. The storage device 49 includes a nonvolatile memory such as a ROM and a volatile memory such as a RAM. The storage device 49 may include a storage such as a hard disk or a solid-state drive (SSD). The storage device 49 stores a program and data for controlling the wheel loader 1.

The controller 47 receives a signal indicating the output rotation speed of the traveling motor 24 from the motor speed sensor 41. The controller 47 receives a signal indicating the vehicle speed from the vehicle speed sensor 42. The controller 47 receives a signal indicating the discharge pressure of the work implement pump 25 from the pump pressure sensor 43. The controller 47 receives a signal indicating the bottom pressure of the boom cylinder 13 from the boom pressure sensor 44. The controller 47 receives a signal indicating the bottom pressure of the bucket cylinder 14 from the bucket pressure sensor 50. The controller 47 receives a signal indicating the boom angle from the boom angle sensor 45. The controller 47 receives a signal indicating the bucket angle from the bucket angle sensor 46.

The control system 9 includes an accelerator operation device 51, an FR operation device 52, a steering operation device 53, a work implement operation device 54, a shift operation device 55, and an input device 56. The accelerator operation device 51, the FR operation device 52, the steering operation device 53, the work implement operation device 54, the shift operation device 55, and the input device 56 can each be manually operated by the operator of the wheel loader 1.

The accelerator operation device 51 is operated to control the vehicle speed of the wheel loader 1. The accelerator operation device 51 includes, for example, an accelerator pedal. However, the accelerator operation device 51 may include another member such as a lever or a switch.

The FR operation device 52 is operated to switch between forward movement and backward movement of the wheel loader 1. The FR operation device 52 is operable to an FNR position including a forward position, a neutral position, and a backward position. The FR operation device 52 includes, for example, an FR lever. However, the FR operation device 52 may include another member such as a switch.

The steering operation device 53 is operated to steer the wheel loader. The steering operation device 53 includes, for example, a steering wheel. However, the steering operation device 53 may include another member such as a lever or a switch.

The work implement operation device 54 is operated to control the work implement 5. The work implement operation device 54 is, for example, a lever. However, the work implement operation device 54 may be another member such as a switch or a pedal.

The shift operation device 55 is operated to switch the transmission gear ratio of the transmission 27. The shift operation device 55 is, for example, a switch. However, the shift operation device 55 may be another member such as a lever.

The input device 56 can be operated by the operator to set a control mode of the wheel loader 1. The input device 56 includes, for example, a switch. However, the input device 56 may include another member such as a touch screen.

The controller 47 receives a signal indicating the amount of accelerator operation from the accelerator operation device 51. The amount of accelerator operation is the amount of operation of the accelerator operation device 51. The controller 47 controls the power control circuit 22 to change the output rotation speed of the traveling motor 24 in accordance with the amount of accelerator operation.

The controller 47 receives a signal indicating the FNR position from the FR operation device 52. The controller 47 controls the direction of rotation of the traveling motor 24 so as to switch the driving direction of the traveling body 6 between the forward direction and the backward direction according to the FNR position of the FR operation device 52. The controller 47 receives a signal indicating the operation position of the steering operation device 53 from the steering operation device 53. The controller 47 controls the steering cylinder 15 such that the wheel loader 1 is steered according to the operation position of the steering operation device 53.

The controller 47 receives a signal indicating the operation position of the work implement operation device 54 from the work implement operation device 54. The controller 47 controls the boom cylinder 13 and the bucket cylinder 14 such that the work implement 5 operates in accordance with the operation position of the work implement operation device 54.

The controller 47 receives a signal indicating the selected gear of the transmission 27 from the shift operation device 55. The controller 47 switches the transmission gear ratio of the transmission 27 within a range from the first gear up to the selected gear in accordance with the vehicle speed and the output rotation speed of the traveling motor 24.

The controller 47 receives a signal indicating the setting of the control mode of the wheel loader 1 from the input device 56. The controller 47 controls the wheel loader 1 in accordance with the control mode set via the input device 56. Specifically, the operator can select the current work mode from multiple work modes executed by the wheel loader 1, via the input device 56. When the current work mode is selected via the input device 56, the controller 47 controls the shift of the transmission 27 according to the current work mode. Hereinafter, the shift control of the transmission 27 according to the current work mode will be described.

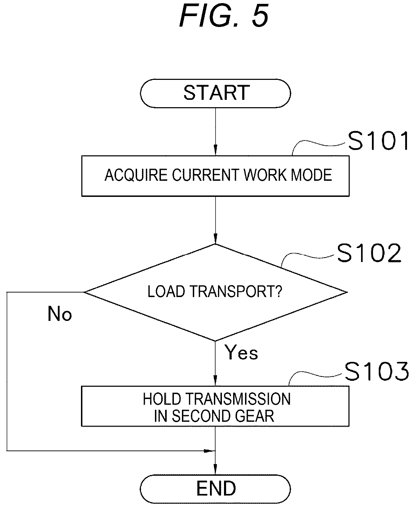

FIG. 5 is a flowchart showing the shift control processing of the transmission 27. As shown in FIG. 5, in step S101, the controller 47 acquires the current work mode. The controller 47 acquires the current work mode selected from the multiple work modes via the input device 56.

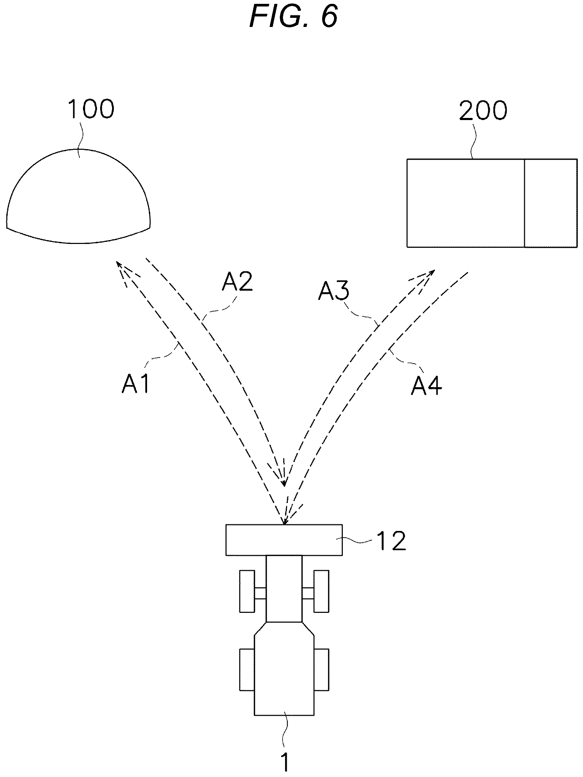

The multiple work modes include heavy excavation, V-shape loading, loading and transport, and low-load traveling. The heavy excavation is work in which the wheel loader 1 excavates a target object of work such as earth and sand with the work implement 5. The V-shape loading is work of loading a target object disposed at a predetermined place onto a transport vehicle such as a dump truck. FIG. 6 is a top view showing the operation of the wheel loader 1 in V-shape loading.

As shown in FIG. 6, the wheel loader 1 moves forward toward a mountain 100 of a target object disposed at a predetermined location (arrow A1). The wheel loader 1 holds the target object in the bucket 12, moves backward, and moves away from the mountain 100 of the target object (arrow A2). The wheel loader 1 moves forward toward a transport vehicle 200 while changing the direction (arrow A3). The wheel loader 1 loads the target object onto the transport vehicle 200. The wheel loader 1 moves backward and moves away from the transport vehicle 200 (arrow A4). Then, the wheel loader 1 moves forward again toward the mountain 100 of the target object while changing the direction (arrow A1). By repeating the above operation, the wheel loader 1 loads the target object onto the transport vehicle 200.

Similarly to the V-shape loading, the loading and transport is work of traveling while holding the target object in the bucket 12, and loading the target object onto the transport vehicle 200. However, in the loading and transport, the traveling distance of the wheel loader 1 is longer than that in the V-shape loading. The low-load traveling is work in which the wheel loader 1 travels in a low-load state. For example, the low-load traveling is the traveling of the wheel loader 1 over a long distance in an unloaded state where the bucket 12 does not hold a target object.

In step S102, the controller 47 determines whether the current work mode is load transport. When the current work mode is the load transport, the controller 47 controls the transmission 27 so as to hold the transmission in the second gear in step S103. The controller 47 prohibits the transmission from shifting from the second gear to another gear. Therefore, while the current work mode is the load transport, the transmission 27 is fixed at the second gear.

In the wheel loader 1 according to the present embodiment described above, when the current work mode is load transport, the transmission 27 is held in the second gear, and the transmission 27 is prohibited from shifting from the second gear to another gear. Therefore, by suppressing the occurrence of a shift shock by the transmission 27, the load is suppressed from spilling from the work implement 5 during the load transport. Also, since the transmission is held in the second gear, the maximum tractive force and the maximum speed suitable for the load transport are provided.

Although one embodiment of the present invention has been described above, the present invention is not limited to the above-described embodiment, and various modifications can be made without departing from the spirit and scope of the invention.

The configuration of the wheel loader 1 is not limited to that of the above embodiment and may be changed. For example, the work implement pump 25 and the traveling body 6 may be driven by a common motor. The number of gears of the transmission 27 is not limited to three, and may be less than three, or more than three. The wheel loader 1 may be remotely operable. In this case, the operation devices 51 to 55 and the input device 56 described above may be disposed outside the wheel loader 1.

The processing by the controller 47 described above may be distributed to and executed by multiple controllers. The shift control of the transmission 27 is not limited to that of the above embodiment, and may be changed. For example, when the current work mode is the load transport, the controller 47 may hold the transmission 27 in a gear other than the second gear.

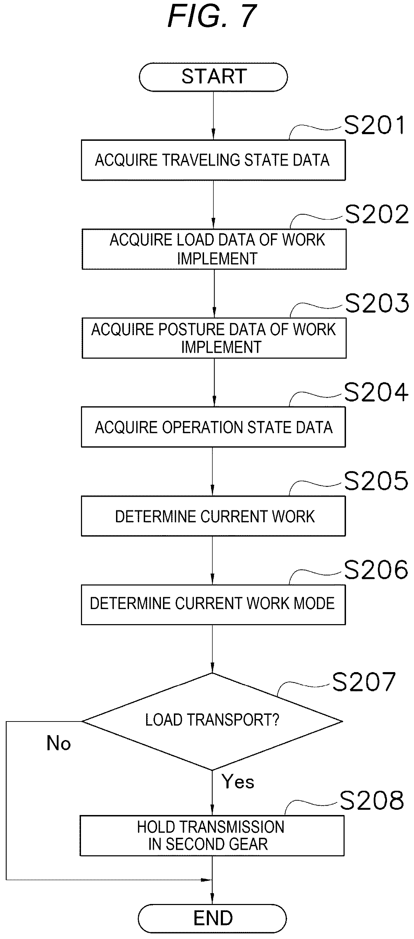

The method for acquiring the current work mode is not limited to that of the above embodiment, and may be changed. For example, FIG. 7 is a flowchart illustrating the shift control processing of the transmission 27 according to a modification example. As shown in FIG. 7, in step S201, the controller 47 acquires traveling state data. The traveling state data indicates the traveling state of the wheel loader 1. The traveling state data includes, for example, the output rotation speed of the traveling motor 24 and the vehicle speed.

In step S202, the controller 47 acquires load data of the work implement 5. The load data of the work implement 5 indicates the load applied to the work implement 5. The load data of the work implement 5 includes, for example, the discharge pressure of the work implement pump 25, the bottom pressure of the boom cylinder 13, and the bottom pressure of the bucket cylinder 14.

In step S203, the controller 47 acquires posture data of the work implement 5. The posture data of the work implement 5 indicates the posture of the work implement 5. The posture data of the work implement 5 includes, for example, the boom angle and the bucket angle.

In step S204, the controller 47 acquires operation state data. The operation state data indicates the operation on the above-described operation devices 51 to 55. The operation state data includes, for example, the amount of accelerator operation, the FNR position, the operation position of the steering operation device 53, the operation position of the work implement operation device 54, and the selected gear.

In step S205, the controller 47 determines the current work being executed by the wheel loader 1. The controller 47 determines the current work, based on the traveling state data, the load data of the work implement 5, the posture data of the work implement 5, and the operation state data, described above. The controller 47 determines the current work being executed by the wheel loader 1 from multiple types of work including heavy excavation, V-shape loading, loading and transport, and low-load traveling.

For example, the controller 47 determines whether the bucket 12 is in the unloaded state, based on the bottom pressure of the boom cylinder 13. When the bottom pressure of the boom cylinder 13 is equal to or higher than a predetermined pressure and the boom angle is equal to or larger than horizontal and equal to or smaller than a predetermined angle from the unloaded state of the bucket 12, the controller 47 determines that a shift to the loading and transport is made. Also, the controller 47 determines that the wheel loader 1 has shifted to the loading and transport when the movement direction is changed to the backward movement from the excavation state. For example, the controller 47 determines that the wheel loader 1 is in the excavation state when the movement direction is forward, the boom angle is equal to or smaller than horizontal, and the bottom pressure of the bucket cylinder 14 is equal to or higher than a predetermined pressure.

In step S206, the controller 47 determines the current work mode. The controller 47 determines the work mode corresponding to the current work determined in step S205, as the current work mode.

In step S207, as in step S102 described above, the controller 47 determines whether the current work mode is the load transport. When the current work mode is the load transport, the controller 47 controls the transmission 27 to hold the transmission in the second gear in step S208, as in step S103 described above. The controller 47 prohibits the transmission from shifting from the second gear to another gear.

In the shift control of the transmission 27 according to the modification example described above, similarly to the embodiment described above, when the current work mode is the load transport, the transmission 27 is held in the second gear, and the transmission 27 is prohibited from shifting from the second gear to another gear. Therefore, by suppressing the occurrence of a shift shock by the transmission 27, the load is suppressed from spilling from the work implement 5 during the load transport. Also, since the transmission is held in the second gear, the maximum tractive force and the maximum speed suitable for the load transport are provided.

### Industrial Applicability

According to the present disclosure, in a wheel loader, the occurrence of a shift shock is suppressed during load transport.

### Reference Signs List

2: vehicle body
5: work implement
6: traveling body
24: traveling motor
27: transmission
47: controller
56: input device

## Claims

1. A wheel loader comprising:
a vehicle body including a traveling body and a work implement;
an electric motor installed in the vehicle body;
a transmission installed in the vehicle body, the transmission being configured to be able to change a transmission gear ratio by shifting among multiple gears and transmit a driving force from the electric motor to the traveling body; and
a controller configured to control the transmission, wherein
the controller is configured to
acquire a current work mode from multiple work modes corresponding to types of work executed by the vehicle body, and
hold the transmission in a predetermined gear and prohibit the transmission from shifting from the predetermined gear to another gear, when the current work mode is load transport.

2. The wheel loader according to claim 1, further comprising:
an input device that is manually operable and is for selecting the current work mode from the multiple work modes, wherein
the controller acquires the work mode selected via the input device, as the current work mode.

3. The wheel loader according to claim 1, wherein
the controller
determines current work being executed by the vehicle body, and
determines a work mode corresponding to the current work, as the current work mode.

4. A method for controlling a wheel loader including a traveling body, a work implement, an electric motor, and a transmission, the transmission being configured to be able to change a transmission gear ratio by shifting among multiple gears and transmit a driving force from the electric motor to the traveling body, the method comprising:
acquiring a current work mode from multiple work modes corresponding to types of work executed by the wheel loader; and
holding the transmission in a predetermined gear and prohibiting the transmission from shifting to a gear other than the predetermined gear, when the current work mode is load transport.

5. The method according to claim 4, comprising:
receiving a signal from an input device that is manually operable and is for selecting the current work mode from the multiple work modes; and
acquiring the work mode selected via the input device, as the current work mode.

6. The method according to claim 4, comprising:
determining current work being executed by the wheel loader; and
determining a work mode corresponding to the current work, as the current work mode.
